# EUROPÄISCHE PATENTANMELDUNG

(11) **EP 4 817 789 A1**
(43) Veröffentlichungstag der Anmeldung: **07.10.2026**
(21) Anmeldenummer: 25168040.1
(22) Anmeldetag: 02.04.2025
(51) Int. Cl.: B23Q 1/54, B23Q 3/06, B23Q 16/10, B23Q 37/00

(54) **SPANNVORRICHTUNG FÜR EIN BEARBEITUNGSZENTRUM UND BEARBEITUNGSZENTRUM**

(71) Anmelder: MG Beteiligungsgesellschaft mbH, 73312 Geislingen/Steige (DE)
(72) Erfinder: Magnus, Grüner, 73312 Geislingen an der Steige (DE)
(74) Vertreter: Patentanwälte Magenbauer & Kollegen Partnerschaft mbB

(57) **Zusammenfassung**

Die Erfindung betrifft eine Spannvorrichtung (100) für ein Bearbeitungszentrum zur mechanischen Bearbeitung von Werkstücken, aufweisend eine Werkstückpalette (110) zur Kopplung mit dem Bearbeitungszentrum, derart, dass die Spannvorrichtung (100) in einem gekoppelten Gebrauchszustand um eine erste Rotationsachse (304) rotierbar ist, und wobei die Spannvorrichtung (100) eine erste Spanneinheit-Aufnahmeeinrichtung (120) und eine zweite Spanneinheit-Aufnahmeeinrichtung (150) aufweist, die mit der Werkstückpalette (110) verbunden sind, wobei die erste Spanneinheit-Aufnahmeeinrichtung (120) ein erstes Aufnahmegehäuse und einen in dem ersten Aufnahmegehäuse aufgenommenen ersten Rundtisch (124) aufweist, an dem eine erste Spanneinheit zur Aufnahme und zum Festspannen eines ersten Werkstückes befestigbar ist, wobei die zweite Spanneinheit-Aufnahmeeinrichtung (150) ein zweites Aufnahmegehäuse und einen in dem zweiten Aufnahmegehäuse aufgenommenen zweiten Rundtisch (154) aufweist, an dem eine zweite Spanneinheit zur Aufnahme und zum Festspannen eines zweiten Werkstückes befestigbar ist.

## Beschreibung

Die Erfindung betrifft eine Spannvorrichtung für ein Bearbeitungszentrum und ein Bearbeitungszentrum.

Aufgabe der vorliegenden Erfindung ist es, den Durchsatz an mit einem Bearbeitungszentrum zu bearbeitenden Werkstücken zu erhöhen und gleichzeitig eine hohe Bearbeitungsqualität zu gewährleisten.

Die Aufgabe wird durch eine Spannvorrichtung nach Anspruch 1 und ein Bearbeitungszentrum nach Anspruch 15 gelöst.

Eine erfindungsgemäße Spannvorrichtung für ein Bearbeitungszentrum zur mechanischen Bearbeitung von Werkstücken weist eine Werkstückpalette zur Kopplung mit dem Bearbeitungszentrum auf, derart, dass die Spannvorrichtung in einem gekoppelten Gebrauchszustand um eine erste Rotationsachse rotierbar ist, und wobei die Spannvorrichtung eine erste Spanneinheit-Aufnahmeeinrichtung und eine zweite Spanneinheit-Aufnahmeeinrichtung aufweist, die mit der Werkstückpalette verbunden sind, wobei die erste Spanneinheit-Aufnahmeeinrichtung ein erstes Aufnahmegehäuse und einen in dem ersten Aufnahmegehäuse aufgenommenen ersten Rundtisch aufweist, an dem eine erste Spanneinheit zur Aufnahme und zum Festspannen eines ersten Werkstückes befestigbar ist, wobei die zweite Spanneinheit-Aufnahmeeinrichtung ein zweites Aufnahmegehäuse und einen in dem zweiten Aufnahmegehäuse aufgenommenen zweiten Rundtisch aufweist, an dem eine zweite Spanneinheit zur Aufnahme und zum Festspannen eines zweiten Werkstückes befestigbar ist, wobei die Spannvorrichtung einen Rundtischantrieb aufweist, der dazu eingerichtet ist, den ersten Rundtisch um eine zweite Rotationsachse zu rotieren und den zweiten Rundtisch um eine dritte Rotationsachse zu rotieren, wobei die erste Spanneinheit-Aufnahmeeinrichtung eine erste Blockiereinrichtung mit einem an der ersten Spanneinheit-Aufnahmeeinrichtung festgelegten ersten Kopplungselement und einem relativ zu dem ersten Kopplungselement bewegbaren ersten Blockierelement aufweist, wobei der erste Rundtisch mittels einer mit dem ersten Blockierelement auszuführenden ersten Einrückbewegung in eine erste Blockierstellung, in der der erste Rundtisch in Bezug auf die zweite Rotationsachse drehfest mit dem ersten Aufnahmegehäuse gekoppelt ist, und mittels einer mit dem ersten Blockierelement auszuführenden ersten Ausrückbewegung in eine erste Freistellung, in der der erste Rundtisch in Bezug auf die zweite Rotationsachse relativ zu dem ersten Aufnahmegehäuse rotierbar ist, versetzbar ist, wobei die zweite Spanneinheit-Aufnahmeeinrichtung eine zweite Blockiereinrichtung mit einem an der zweiten Spanneinheit-Aufnahmeeinrichtung festgelegten zweiten Kopplungselement und einem relativ zu dem zweiten Kopplungselement bewegbaren zweiten Blockierelement aufweist, wobei der zweite Rundtisch mittels einer mit dem zweiten Blockierelement auszuführenden zweiten Einrückbewegung in eine zweite Blockierstellung, in der der zweite Rundtisch in Bezug auf die dritte Rotationsachse drehfest mit dem zweiten Aufnahmegehäuse gekoppelt ist, und mittels einer mit dem zweiten Blockierelement auszuführenden zweiten Ausrückbewegung in eine zweite Freistellung, in der der zweite Rundtisch in Bezug auf die dritte Rotationsachse relativ zu dem zweiten Aufnahmegehäuse rotierbar ist, versetzbar ist.

Als Bearbeitungszentrum wird eine Maschine beziehungsweise Anlage bezeichnet, mit der Werkstücke mechanisch bearbeitbar sind. Als mechanisches Bearbeiten von Werkstücken wird dabei ein Umformen, Trennen, Fügen, Beschichten und/oder Ändern der Stoffeigenschaften des Werkstückes verstanden. Rein exemplarisch ist das Werkstück in dem Bearbeitungszentrum spanend bearbeitbar.

Die Werkstückpalette dient zur Kopplung der Spannvorrichtung mit dem Bearbeitungszentrum. Die Kopplung umfasst einerseits ein mechanisches Verbinden der Werkstückpalette mit dem Bearbeitungszentrum. Die Kopplung umfasst andererseits eine funktionale Verbindung der Werkstückpalette mit dem Bearbeitungszentrum, beispielsweise, um Antriebsenergie und/oder Antriebssignale von dem Bearbeitungszentrum zur Spannvorrichtung zu übertragen, insbesondere um die Spannvorrichtung um die erste Rotationsachse zu rotieren. In dem Gebrauchszustand ist die Spannvorrichtung über die Werkstückpalette mit dem Bearbeitungszentrum gekoppelt.

Die Werkstückpalette dient ferner zur Verbindung der ersten Spanneinheit-Aufnahmeeinrichtung und der zweiten Spanneinheit-Aufnahmeeinrichtung mit dem Bearbeitungszentrum. Bevorzugt sind die Werkstückpalette, die erste Spanneinheit-Aufnahmeeinrichtung und die zweite Spanneinheit-Aufnahmeeinrichtung fest miteinander verbunden, insbesondere miteinander verschraubt. Ferner bevorzugt grenzt die erste Spanneinheit-Aufnahmeeinrichtung an die Werkstückpalette an und grenzt die zweite Spanneinheit-Aufnahmeeinrichtung an die erste Spanneinheit-Aufnahmeeinrichtung an. Weiter bevorzugt erfolgt die vorgenannte Verbindung über das erste Aufnahmegehäuse und zweite Aufnahmegehäuse, das heißt, dass das erste Aufnahmegehäuse und das zweite Aufnahmegehäuse mit der Werkstückpalette verbunden sind.

Komponenten, deren Bezeichnung das Zahlwort "erste" umfasst, bilden eine erste Funktionseinheit. Solche Komponenten sind beispielsweise die erste Spanneinheit-Aufnahmeeinrichtung, das erste Aufnahmegehäuse, der erste Rundtisch u.s.w. Komponenten, deren Bezeichnung das Zahlwort "zweite" umfasst, bilden eine zweite Funktionseinheit. Solche Komponenten sind beispielsweise die zweite Spanneinheit-Aufnahmeeinrichtung, das zweite Aufnahmegehäuse, der zweite Rundtisch u.s.w. Bevorzugt sind Komponenten, deren Bezeichnung sich lediglich durch das Zahlwort "erste" und "zweite" unterscheidet, gleichartig ausgebildet. Beispielsweise sind das erste Aufnahmegehäuse und das zweite Aufnahmegehäuse gleichartig ausgebildet. Aus Gründen der besseren Lesbarkeit wird bei den nachstehenden Ausführungen teilweise auf die Zahlwörter "erste" und "zweite" verzichtet, wobei die jeweiligen Ausführungen auf die betreffende "erste" Komponente und/oder die betreffende "zweite" Komponenten zutreffen. Beispielsweise treffen Ausführungen mit Bezug zu dem Aufnahmegehäuse auf das erste Aufnahmegehäuse und/oder das zweite Aufnahmegehäuse zu.

Der in dem Aufnahmegehäuse aufgenommene Rundtisch ist von dem Aufnahmegehäuse zumindest teilweise umgeben. Bevorzugt ragt der Teil des Rundtisches, an dem die Spanneinheit befestigbar ist, aus dem Aufnahmegehäuse heraus.

Die Spanneinheit weist zumindest ein Spannelement auf, das zwischen einer Freigabestellung und einer das zu bearbeitende Werkstück festspannenden Spannstellung bewegbar ist. Bevorzugt ist die Spanneinheit befestigt. Ferner bevorzugt ist vorgesehen, dass die Spanneinheit für das festzuspannende und mit dem Bearbeitungszentrum zu bearbeitende Werkstück spezifisch ausgebildet ist. Dies kann insbesondere dadurch erreicht werden, dass eine Außengeometrie und/oder Anordnung des Spannelementes zu einer Außengeometrie des Werkstückes korrespondiert. Weiter bevorzugt ist vorgesehen, dass die Spanneinheit wechselbar ausgebildet ist, sodass je nach zu bearbeitendem Werkstück eine jeweils geeignete Spanneinheit an dem Rundtisch befestigt werden kann. Indem ein erster Rundtisch und ein zweiter Rundtisch vorgesehen sind, können erfindungsgemäß mit einer einzelnen Spannvorrichtung gleichzeitig zwei Spanneinheiten - die erste Spanneinheit und die zweite Spanneinheit - verwendet und damit gleichzeitig zwei Werkstücke - das erste Werkstück und das zweite Werkstück - festgespannt werden. Hierdurch kann ein hoher Durchsatz an mit dem Bearbeitungszentrum zu bearbeitenden Werkstücken erreicht werden.

Bevorzugt sind die zweite Rotationsachse und die dritte Rotationsachse in der Gebrauchsstellung im Wesentlichen horizontal ausgerichtet. Ferner bevorzugt ist die zweite Rotationsachse parallel zu der dritten Rotationsachse ausgerichtet. Ist an dem Rundtisch die Spanneinheit befestigt und ist mit der Spanneinheit das Werkstück festgespannt, kann durch Rotation des Rundtisches um die zweite Rotationsachse beziehungsweise dritte Rotationsachse in gleicher Weise das Werkstück um die zweite Rotationsachse beziehungsweise dritte Rotationsachse rotiert werden. Hierdurch kann das Werkstück in gewünschter Weise rotativ zu einer, insbesondere lediglich linear beweglichen, Bearbeitungswerkzeugvorrichtung des Bearbeitungszentrums ausgerichtet werden, sodass verschiedene Außenseiten des Werkstückes mechanisch bearbeitet werden können und/oder das Werkstück mit unterschiedlichen Bearbeitungswinkeln bearbeitet werden kann.

Um zu verhindern, dass sich ein zu bearbeitendes Werkstück während dessen mechanischer Bearbeitung unerwünscht verdreht, wodurch dessen Bearbeitung nicht wie geplant durchführbar ist, ist erfindungsgemäß vorgesehen, dass mit dem Rundtisch die Blockiereinrichtung mittels der Einrückbewegung in die Blockierstellung versetzbar ist. In der Blockierstellung ist der Rundtisch in Bezug auf die zweite Rotationsachse beziehungsweise dritte Rotationsachse drehfest mit dem Aufnahmegehäuse gekoppelt. Hierdurch kann eine hohe Bearbeitungsqualität gewährleistet werden. In der Freistellung, die mittels der Ausrückbewegung erreichbar ist, ist der Rundtisch in Bezug auf die zweite Rotationsachse beziehungsweise dritte Rotationsachse relativ zu dem Aufnahmegehäuse rotierbar. Mit dem Kopplungselement und dem Blockierelement sind zwei relativ zueinander bewegbare Elemente der Blockiereinrichtung vorgesehen, mit denen die Einrückbewegung und die Ausrückbewegung ausführbar ist.

Vorteilhafte Weiterbildungen sind Gegenstand der Unteransprüche.

Vorzugsweise ist bei wenigstens einer der Blockiereinrichtungen das Kopplungselement als fest mit dem Aufnahmegehäuse verbundenes Außen-Kopplungselement ausgebildet, und weist wenigstens eine der Blockiereinrichtungen ein fest mit dem ersten Rundtisch beziehungsweise dem zweiten Rundtisch verbundenes Innen-Kopplungselement auf, wobei in der Blockierstellung das Außen-Kopplungselement in Bezug auf eine Rotation um die zweite Rotationsachse beziehungsweise die dritte Rotationsachse formschlüssig mit dem Innen-Kopplungselement verbunden ist. Bevorzugt beziehen sich die Präfixe "Außen" und "Innen" auf eine Anordnung des betreffenden Kopplungselementes zueinander in Bezug auf eine senkrecht zu der Rotationsachse aufgespannten Ebene. Dementsprechend weist bevorzugt das Außen-Kopplungselement in der senkrecht zu der Rotationsachse verlaufenden Ebene eine größere Ausdehnung auf als das Innen-Kopplungselement, insbesondere weist eine eine Außengeometrie des Außen-Kopplungselementes umhüllende Außen-Hüllkurve einen größeren Durchmesser auf als eine eine Außengeometrie des Innen-Kopplungselementes umhüllende Innen-Hüllkurve des Innen-Kopplungselementes. Ferner bevorzugt umschließt das Außen-Kopplungselement das Innen-Kopplungselement. Weiter bevorzugt sind das Außen-Kopplungselement und das Innen-Kopplungselement konzentrisch angeordnet, insbesondere weisen das Außen-Kopplungselement und das Innen-Kopplungselement einen gleichen Mittelpunkt auf.

Vorzugsweise weist das Außen-Kopplungselement ein äußeres Zahnprofil auf und weist das Innen-Kopplungselement ein inneres Zahnprofil auf, das in der Blockierstellung mit dem äußeren Zahnprofil in Eingriff steht. Das äußere Zahnprofil und das innere Zahnprofil weisen jeweils mehrere Zähne auf. Das innere Zahnprofil kann direkt mit dem äußeren Zahnprofil in Eingriff stehen, sodass Zahnflanken des inneren Zahnprofiles unmittelbar an Zahnflanken des äußeren Zahnprofiles anliegen. Alternativ kann das innere Zahnprofil indirekt mit dem äußeren Zahnprofil in Eingriff stehen. Insbesondere ist das Blockierelement zwischen dem inneren Zahnprofil und dem äußeren Zahnprofil angeordnet, sodass Zahnflanken des inneren Zahnprofiles an dem Blockierelement anliegen und das Blockierelement wiederum an Zahnflanken des äußeren Zahnprofiles anliegt.

Vorzugsweise sind das äußere Zahnprofil und das innere Zahnprofil jeweils als Axialverzahnung ausgebildet. Dementsprechend sind das äußere Zahnprofil und das innere Zahnprofil jeweils an einer Stirnseite des Außen-Kopplungselementes und des Innen-Kopplungselementes ausgebildet. Die Axialverzahnungen werden auch als planseitige Verzahnungen bezeichnet. Bevorzugt sind das äußere Zahnprofil und das innere Zahnprofil im Wesentlichen parallel zu der zweiten Rotationsachse beziehungsweise dritten Rotationsachse ausgerichtet, wobei eine sich von einem Fußkreis des äußeren Zahnprofils beziehungsweise inneren Zahnprofils zu einem Kopfkreis des äußeren Zahnprofils beziehungsweise inneren Zahnprofils erstreckende Zahnrichtung im Wesentlichen parallel zu der zweiten Rotationsachse beziehungsweise dritten Rotationsachse erstreckt.

Vorzugsweise weist bei wenigstens einer der Blockiereinrichtungen das Blockierelement ein, insbesondere als Axialverzahnung ausgebildetes, erstes Brückenzahnprofil, das in der Blockierstellung formschlüssig an dem äußeren Zahnprofil anliegt, und ein, insbesondere als Axialverzahnung ausgebildetes, zweites Brückenzahnprofil auf, das in der Blockierstellung formschlüssig an dem inneren Zahnprofil anliegt, wobei das Blockierelement dazu eingerichtet ist, die Einrückbewegung und die Ausrückbewegung entlang einer, insbesondere parallel zu der zweiten Rotationsachse beziehungsweise dritten Rotationsachse ausgerichteten, Rückachse auszuführen. Damit sind für eine Blockiereinrichtung insgesamt zwei Zahnprofilpaare vorgesehen, nämlich als erstes Paar das äußere Zahnprofil und das erste Brückenzahnprofil sowie als zweites Paar das innere Zahnprofil und das zweite Brückenzahnprofil. In der Blockierstellung stehen die beiden Zahnprofilpaare gleichzeitig in Eingriff. In der Freistellung stehen die beiden Zahnprofilpaare gleichzeitig außer Eingriff. Insbesondere sind das erste Brückenzahnprofil und das zweite Brückenzahnprofil entgegengesetzt zu dem äußeren Zahnprofil und dem inneren Zahnprofil ausgerichtet. Derart kann mit der Einrückbewegung das Blockierelement hin zu dem Außen-Kopplungselement und dem Innen-Kopplungselement bewegt werden und mit der Ausrückbewegung das Blockierelement weg von dem Außen-Kopplungselement und dem Innen-Kopplungselement bewegt werden.

Ferner vorzugsweise sind das Außen-Kopplungselement, das Innen-Kopplungselement und das Blockierelement jeweils ringartig ausgebildet. Eine ringartige Ausbildung bedeutet, dass das Außen-Kopplungselement, das Innen-Kopplungselement und das Blockierelement jeweils zumindest als Ringabschnitt oder als geschlossener Ring ausgebildet sein können.

Vorzugsweise bilden das äußere Zahnprofil und das erste Brückenzahnprofil sowie das innere Zahnprofil und das zweite Brückenzahnprofil jeweils eine Passverzahnung, bevorzugt eine Kerbverzahnung, besonders bevorzugt eine Plan-Kerbverzahnung. Eine Passverzahnung ist eine Vielfach-Mitnehmerverbindung, bei der Drehmoment von den Zahnflanken übertragen wird. Eine Kerbverzahnung ist eine spezielle Passverzahnung, bei der die einzelnen Zahnprofile spitz zulaufende Zähne aufweisen. Eine Plan-Kerbverzahnung ist eine spezielle Kerbverzahnung, bei der eine axial wirksame, planseitige Verzahnung vorliegt. Insbesondere bilden das äußere Zahnprofil und das erste Brückenzahnprofil sowie das innere Zahnprofil und das zweite Brückenzahnprofil jeweils eine Hirth-Verzahnung aus.

Vorzugsweise weist wenigstens eine der Blockiereinrichtungen eine Verstelleinrichtung auf, die ein mit dem Blockierelement verbundenes Kolbenelement aufweist, das in einem Zylinder aufgenommen ist, wobei die Verstelleinrichtung hydraulisch wirkend ausgebildet ist. Das Kolbenelement trennt in einem Innenraum des Zylinders eine erste Druckkammer fluidisch von einer zweiten Druckkammer. Für die vorgenannte fluidische Trennung ist insbesondere an dem Kolbenelement eine Dichtung festgelegt. Wird eine Hydraulikflüssigkeit in eine der Drucckammern eingeführt, steigt der Druck in dieser Druckkammer, wodurch das Kolbenelement in Richtung der anderen Druckkammer bewegt wird. Das Einführen von Hydraulikflüssigkeit in eine Druckkammer wird daher auch als Beaufschlagen dieser Drucckammer mit Druck bezeichnet. Wird eine Druckkammer mit Druck beaufschlagt, erhöht sich das Volumen der betreffenden Drucckammer. Insofern kann durch Beaufschlagung einer Druckkammer mit Druck das Kolbenelement in dem Zylinder bewegt werden und somit in gleicher Weise das mit dem Kolbenelement verbundene Blockierelement bewegt werden. Insbesondere ist das Blockierelement an einer, insbesondere in Bezug auf die zweite Rotationsachse beziehungsweise dritte Rotationsachse endseitig angeordnete, Stirnseite des Kolbenelementes festgelegt.

Ist zumindest eine Axialverzahnung vorgesehen, ist es zur Übertragung beziehungsweise zum Ableiten von Drehmoment vorteilhaft, wenn Elemente der Blockiereinrichtung gegeneinander gepresst werden, insbesondere wenn das Blockierelement gegen das Außen-Kopplungselement und gegen das Innen-Kopplungselement gepresst wird. Hierdurch kann verhindert werden, dass trotz dessen, dass sich der Rundtisch in der Blockierstellung befindet, die Elemente der Blockiereinrichtung gegeneinander rotiert werden, wodurch der Rundtisch unerwünscht verdreht wird. Das vorgenannte Anpressen wird insbesondere dadurch erreicht, dass in der Blockierstellung die betreffende Drucckammer permanent mit Druck beaufschlagt wird.

Ferner vorzugsweise ist der Zylinder zumindest teilweise durch das Außen-Kopplungselement gebildet. Bevorzugt ist der Zylinder ferner durch einen zwischen dem Außen-Kopplungselement und dem Aufnahmegehäuse festgelegten Zwischenring sowie zwei voneinander beabstandete Endabschnitte des Kolbenelementes gebildet. Zwischen den beiden Endabschnitten des Kolbenelementes ragt in radialer Richtung ein Mittelabschnitt des Kolbenelementes in den Zylinderinnenraum hinein. Dieser Mittelabschnitt bildet in funktionaler Hinsicht den eigentlichen Kolben.

Vorzugsweise weist wenigstens eine der Blockiereinrichtungen eine Spielbegrenzungseinrichtung auf, die in der Freistellung in Bezug auf eine Rotation um die zweite Rotationsachse beziehungsweise dritte Rotationsachse ein Spiel zwischen dem Außen-Kopplungselement und dem Blockierelement begrenzt. Hierdurch kann verhindert werden, dass in der Freistellung das Blockierelement frei in Bezug auf die zweite Rotationsachse beziehungsweise dritte Rotationsachse rotierbar ist. Bei einer solchen freien Rotierbarkeit würde das Risiko resultieren, dass bei der Einrückbewegung Zahnköpfe des ersten Brückenzahnprofils auf Zahnköpfe des äußeren Zahnprofils stoßen und/oder Zahnköpfe des zweiten Brückenzahnprofils auf Zahnköpfe des inneren Zahnprofils stoßen. Stoßen die vorgenannten Zahnköpfe in entsprechender Weise aufeinander, besteht das Risiko, dass mit der Einrückbewegung nicht zuverlässig die Blockierstellung erreicht werden kann.

Bevorzugt ist die Spielbegrenzungseinrichtung dazu eingerichtet, in der Freistellung in Bezug auf eine Rotation um die zweite Rotationsachse beziehungsweise dritte Rotationsachse ein Spiel zwischen dem Außen-Kopplungselement und dem Blockierelement derart zu begrenzen, dass mit der Einrückbewegung zuverlässig Zahnköpfe des ersten Brückenzahnprofils zwischen Zahnköpfe des äußeren Zahnprofils gleiten und Zahnköpfe des zweiten Brückenzahnprofils zwischen Zahnköpfe des inneren Zahnprofils gleiten und dabei zu verhindern, dass jeweils entlang einer parallel zu der ersten Rotationsachse beziehungsweise zweiten Rotationsachse ausgerichteten Einzelzahnrichtung einzelne Zahnköpfe des ersten Brückenzahnprofils einzelnen Zahnköpfen des äußeren Zahnprofils gegenüberliegen und/oder einzelne Zahnköpfe des zweiten Brückenzahnprofils einzelnen Zahnköpfen des inneren Zahnprofils gegenüberliegen.

Vorzugsweise weist die Spielbegrenzungseinrichtung einen, insbesondere an dem Außen-Kopplungselement befestigten, Begrenzungsstift und eine, insbesondere an dem Blockierelement vorgesehene, Stiftaufnahme auf, wobei zwischen dem Begrenzungsstift und der Stiftaufnahme eine Spielpassung ausgebildet ist, wobei der Begrenzungsstift in der Stiftaufnahme aufgenommen ist, wenn sich der Rundtisch in der Freistellung befindet. Bevorzugt ist der Begrenzungsstift zylindrisch ausgebildet. Ferner bevorzugt ist die Stiftaufnahme zylindrisch ausgebildet. Weiter bevorzugt ist der Begrenzungsstift auch dann in der Stiftaufnahme aufgenommen, wenn sich der Rundtisch in der Blockierstellung befindet.

Vorzugsweise weist der Rundtischantrieb eine zum rotatorischen Antrieb des ersten Rundtisches ausgebildete erste Antriebswelle und eine zum rotatorischen Antrieb des zweiten Rundtisches ausgebildete zweite Antriebswelle auf. Dementsprechend ist für jeden Rundtisch eine separate Antriebswelle vorgesehen. Hierdurch kann die Montage der Spannvorrichtung vereinfacht werden.

Ferner vorzugsweise ist die erste Antriebswelle, insbesondere mittels einer Kupplung, mit der zweiten Antriebswelle verbunden. Bevorzugt ist die Kupplung als Balgkupplung ausgebildet. Mit der Balgkupplung kann ein axialer Versatz zwischen der ersten Antriebswelle und der zweiten Antriebswelle ausgeglichen werden. Auf diese Weise kann in Hinblick auf einen axialen Abstand zwischen der ersten Antriebswelle und der zweiten Antriebswelle mit einer größeren Toleranz gefertigt werden, wodurch die Fertigung der Spannvorrichtung vereinfacht wird.

Vorzugsweise weist wenigstens eine der Antriebswellen einen Schneckengetriebeabschnitt auf, wobei der Rundtisch an einer radialen Außenfläche einen mit dem Schneckengetriebeabschnitt in Eingriff stehenden Schneckenradabschnitt aufweist. Auf diese Weise kann die betreffende Antriebswelle um eine Antriebswellenlängsachse rotiert werden, die senkrecht zu der zweiten Rotationsachse beziehungsweise dritten Rotationsachse ausgerichtet ist, um eine Rotation des Rundtisches um die zweite Rotationsachse beziehungsweise dritte Rotationsachse zu erzeugen.

Vorzugsweise weist wenigstens einer der Schneckengetriebeabschnitte eine Duplex-Verzahnung auf, wobei an wenigstens einem Aufnahmegehäuse zumindest ein Distanzring angeordnet ist, um eine axiale Position der Antriebswelle in Bezug auf das Aufnahmegehäuse einzustellen. Bei einer Duplex-Verzahnung ändert sich ein Modul von Zahnflanken des Schneckengetriebeabschnittes entlang der Antriebswellenlängsachse, insbesondere kontinuierlich. Derart verändert sich die Zahnbreite der einzelnen Zähne des Schneckengetriebeabschnittes entlang der Antriebswellenlängsachse. Je nach Eingriffsposition zwischen dem Schneckengetriebeabschnitt und dem Schneckenradabschnitt resultiert ein unterschiedlich stark ausgeprägtes Spiel zwischen dem Schneckengetriebeabschnitt und dem Schneckenradabschnitt. Indem die Antriebswelle und der Rundtisch in Bezug auf die Antriebswellenlängsachse relativ zueinander versetzt werden, kann das vorgenannte Spiel eingestellt werden.

Bevorzugt wird das Spiel zwischen dem Schneckengetriebeabschnitt und dem Schneckenradabschnitt dadurch eingestellt, dass die Antriebswelle entlang der Antriebswellenlängsachse, also axial relativ zu dem Aufnahmegehäuse versetzt wird. Durch Vorsehen verschiedener Distanzringe, die im Gebrauchszustand in Bezug auf die Antriebswellenlängsachse unterschiedliche Ausdehnungen aufweisen, kann ein spezifisches Spiel zwischen dem Schneckengetriebeabschnitt und dem Schneckenradabschnitt fixiert werden.

Bevorzugt liegen in der Gebrauchsstellung Zahnflanken des äußeren Zahnprofils an Zahnflanken des ersten Brückenzahnprofils an und Zahnflanken des inneren Zahnprofils an Zahnflanken des zweiten Brückenzahnprofils an. Ferner bevorzugt sind die jeweiligen Zahnprofile derart ausgebildet, dass ein Spiel in Bezug auf eine Rotation um die zweite Rotationsachse beziehungsweise dritte Rotationsachse minimiert wird. Hierdurch gleiten mit der Einrückbewegung, falls das Innen-Kopplungselement nicht exakt zum Blockierelement beziehungsweise Außen-Kopplungselement ausgerichtet ist, Zahnflanken des inneren Zahnprofiles derart an Zahnflanken des zweiten Brückenzahnprofiles ab, dass das Innen-Kopplungselement in Bezug auf die zweite Rotationsachse beziehungsweise dritte Rotationsachse in geringem Umfang nachgedreht wird. Je nach Rotationsstellung des Innen-Kopplungselementes, die durch eine entsprechende Rotationsstellung des Rundtisches vorgegeben wird, kann das Nachdrehen des Rundtisches in zwei unterschiedliche Drehrichtungen erfolgen, nämlich einerseits im Uhrzeigersinn und andererseits entgegen dem Uhrzeigersinn.

Durch das Nachdrehen des Rundtisches wird auch der Schneckenradabschnitt relativ zu dem Schneckengetriebeabschnitt bewegt. Hierbei besteht das Risiko, dass Zahnflanken des Schneckenradabschnittes gegen Zahnflanken des Schneckengetriebeabschnittes gepresst werden, wodurch eine entlang der Antriebswellenlängsachse gerichtete Last auf die Antriebswelle wirkt. Diese Last kann zum einen dazu führen, dass der Rundtisch nicht so weit nachgedreht wird, wie dies erforderlich wäre, damit die Blockierstellung vollständig erreicht wird. Zum anderen kann diese Last dazu führen, dass ein entsprechender Lastabtrag auf ein die Antriebswelle lagerndes Lager und/oder einen die Antriebswelle antreibenden Motor beziehungsweise ein in diesem Zusammenhang eingesetztes Getriebe stattfindet. Diese lastaufnehmenden Komponenten würden dabei zusätzlich belastet werden, wodurch gegebenenfalls Lebensdauern reduziert werden.

Um die vorgenannten mit dem Pressen der Zahnflanken des Schneckenradabschnittes an die Zahnflanken des Schneckengetriebeabschnittes einhergehenden Risiken zu minimieren, ist es vorzugsweise vorgesehen, dass die Antriebswelle derart ausgerichtet wird, dass die Duplex-Verzahnung des Schneckengetriebeabschnittes in beide Drehrichtungen zu der Verzahnung des Schneckenradabschnittes ein Spiel aufweist, das im Wesentlichen der Hälfte einer Teilung des inneren Zahnprofils entspricht.

Vorzugsweise ist der Rundtischantrieb dazu eingerichtet, den ersten Rundtisch und den zweiten Rundtisch synchron anzutreiben. Hierdurch kann ein an der ersten Spanneinheit festgespanntes erstes Werkstück synchron zu einem an der zweiten Spanneinheit festgespannten zweiten Werkstück gedreht werden.

Vorzugsweise ist die Werkstückpalette mit einer Gegen-Schnittstelle zur Kopplung mit einer Schnittstelle eines Drehtellers des Bearbeitungszentrums ausgebildet, wobei die Spannvorrichtung über die Gegen-Schnittstelle mittels dem Drehteller um die erste Rotationsachse rotierbar ist. Bevorzugt sind Gegen-Schnittstellen verschiedener Spannvorrichtungen gleichartig ausgebildet. Auf diese Weise können an das selbe Bearbeitungszentrum verschiedene Spannvorrichtungen angeschlossen werden, die insbesondere jeweils für Spanneinheiten eingerichtet sind, die wiederum verschiedenen Werkstückgeometrien zugeordnet sind. Derart kann die Flexibilität des Bearbeitungszentrums erhöht werden.

Ferner vorzugsweise verläuft die erste Rotationsachse schräg zu der zweiten Rotationsachse und schräg zu der dritten Rotationsachse. Insbesondere verläuft die erste Rotationsachse senkrecht zu der zweiten Rotationsachse und senkrecht zu der dritten Rotationsachse.

Ein erfindungsgemäßes Bearbeitungszentrum zur Bearbeitung von Werkstücken weist eine entlang einer x-Achse und entlang einer senkrecht zu der x-Achse verlaufenden y-Achse bewegbare Werkstückpositioniereinheit, die mit einer wie vorstehend beschriebenen Spannvorrichtung bestückt ist, und eine Werkzeugschlittenvorrichtung, die mit einer Bearbeitungswerkzeugvorrichtung bestückbar ist, um ein mittels der ersten Spanneinheit gespanntes erstes Werkstück und ein mittels der zweiten Spanneinheit gespanntes zweites Werkstück in einer Bearbeitungszone mechanisch zu bearbeiten, auf, wobei die Werkzeugschlittenvorrichtung eine zu einer Rotationsbewegung antreibbare Antriebsspindel zur Bereitstellung von Antriebsenergie für die Bearbeitungswerkzeugvorrichtung aufweist, wobei die Werkzeugschlittenvorrichtung entlang einer senkrecht zu der x-Achse und senkrecht zu der y-Achse verlaufenden z-Achse linear bewegbar ist.

Ein solches Bearbeitungszentrum wird auch als Doppel-5-Achs-Bearbeitungszentrum bezeichnet. Die Anzahl der Achsen, also fünf, bezieht sich darauf, in Bezug auf wie viele Achsen eine Relativbewegung zwischen einem mit der ersten Spanneinheit beziehungsweise zweiten Spanneinheit gespannten Werkstück und einem diesem Werkstück zugeordneten Bearbeitungswerkzeug bewirkt werden kann. Bei dem erfindungsgemäßen Werkstück ergeben sich die fünf Achsen wie folgt: Die x-Achse entspricht der ersten Achse. Die damit einhergehende Relativbewegung ist die Bewegung entlang der x-Achse. Die y-Achse entspricht der zweiten Achse. Die damit einhergehende Relativbewegung ist die Bewegung entlang der y-Achse. Die z-Achse entspricht der dritten Achse. Die damit einhergehende Relativbewegung ist die Bewegung entlang der z-Achse. Die erste Rotationsachse entspricht der vierten Achse. Die damit einhergehende Relativbewegung ist die Rotation um die erste Rotationsachse.

Zudem sind mit der zweiten Rotationsachse und der dritten Rotationsachse zwei fünfte Achsen vorgesehen. Daher wird die Bezeichnung "Doppel-5-Achs" verwendet. Die mit den beiden fünften Achsen einhergehenden Relativbewegungen sind die Rotation um die zweite Rotationsachse und die Rotation um die dritte Rotationsachse. Grundsätzlich bieten 5-Achs-Bearbeitungszentren den Vorteil, dass ohne umzuspannen, also mit beziehungsweise in einer Spannung ein Werkstück vollständig bearbeitet werden kann. Bei dem erfindungsgemäßen Bearbeitungszentrum sind zwei fünfte Achsen vorgesehen. Das bietet einerseits den Vorteil, dass eine höhere Auslastung erzielt werden kann. Andererseits geht damit der Vorteil einher, dass mit einem einzelnen Fräskopf zwei Werkstücke - eines ist mit der ersten Spanneinheit gespannt und ein anderes mit der zweiten Spanneinheit - parallel bearbeitet werden können.

Bevorzugt weist die Werkzeugschlittenvorrichtung einen einzelnen Schlitten auf. Ferner bevorzugt weist die Bearbeitungswerkzeugvorrichtung zumindest zwei Bearbeitungswerkzeuge auf, wobei ein erstes Bearbeitungswerkzeug dem ersten Werkstück zugeordnet ist, und wobei ein zweites Bearbeitungswerkzeug dem zweiten Werkstück zugeordnet ist. Hierdurch können durch eine mittels der Werkzeugschlittenvorrichtung entlang der z-Achse auszuführenden Werkzeugzustellbewegung gleichzeitig beide Bearbeitungswerkzeuge an das jeweilige Werkstück zugestellt werden. Diese Zustellung erfolgt insofern synchron, wodurch eine hohe Bearbeitungsgenauigkeit erreicht werden kann.

Alternativ weist die Werkzeugschlittenvorrichtung zwei Schlitten auf, wobei jeder der beiden Schlitten ein Bearbeitungswerkzeug der Bearbeitungswerkzeugvorrichtung trägt, sodass die Bearbeitungswerkzeuge unabhängig voneinander an das jeweils zu bearbeitende Werkstück zugestellt werden können. Hierdurch können die beiden Werkstücke mit großer Flexibilität bearbeitet werden.

Nachfolgend wird die Erfindung anhand der beiliegenden Zeichnung näher erläutert und in dieser zeigen
- Fig. 1: eine Spannvorrichtung,
- Fig. 2: die in Fig. 1 dargestellte Spannvorrichtung mit einer ersten Spanneinheit und einer zweiten Spanneinheit,
- Fig. 3: die in Fig. 1 dargestellte Spannvorrichtung in einer Schnittansicht,
- Fig. 4: die in den Fig. 1 und 3 dargestellte Spannvorrichtung in einer weiteren Schnittansicht,
- Fig. 5: ein Detail der in den Fig. 1, 3 und 4 dargestellten Spannvorrichtung,
- Fig. 6: ein weiteres Detail der in den Fig. 1, 3 und 4 dargestellten Spannvorrichtung,
- Fig. 7: ein weiteres Detail einer Spannvorrichtung, und
- Fig. 8: ein Bearbeitungszentrum.

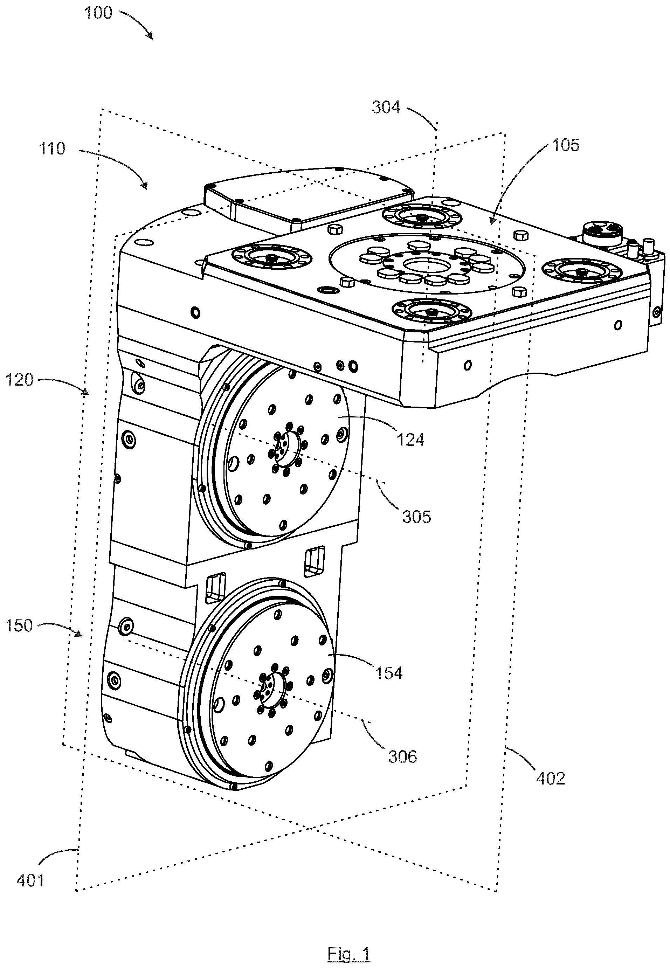

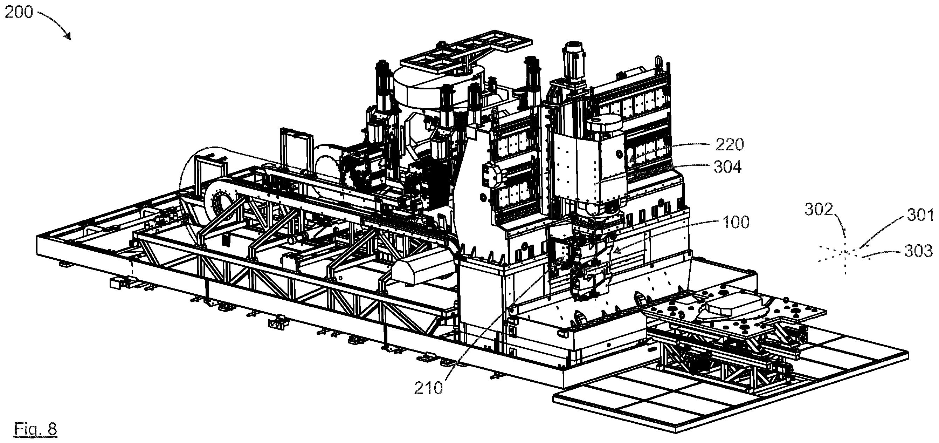

Fig. 1 zeigt eine Spannvorrichtung 100. Die Spannvorrichtung 100 weist eine Werkstückpalette 110 auf. Rein exemplarisch ist die Werkstückpalette 110 mit einer Gegen-Schnittstelle 105 zur Kopplung mit einer Schnittstelle eines Drehtellers eines Bearbeitungszentrums 200 ausgebildet (vgl. Fig. 8). Die Spannvorrichtung 100 ist über die Gegen-Schnittstelle 105 mittels dem Drehteller um eine erste Rotationsachse 304 rotierbar.

Die Spannvorrichtung 100 weist ferner eine erste Spanneinheit-Aufnahmeeinrichtung 120 und eine zweite Spanneinheit-Aufnahmeeinrichtung 150 auf. Rein exemplarisch ist die erste Spanneinheit-Aufnahmeeinrichtung 120 unmittelbar an der Werkstückpalette 110 befestigt und unmittelbar an der zweiten Spanneinheit-Aufnahmeeinrichtung 150. Die erste Spanneinheit-Aufnahmeeinrichtung 120 weist einen ersten Rundtisch 124 auf, der um eine zweite Rotationsachse 305 rotierbar ist. Die zweite Spanneinheit-Aufnahmeeinrichtung 150 weist einen zweiten Rundtisch 154 auf, der um eine dritte Rotationsachse 306 rotierbar ist.

Rein exemplarisch ist die zweite Rotationsachse 305 senkrecht zu der ersten Rotationsachse 304 ausgerichtet und ist die dritte Rotationsachse 306 parallel zu der zweiten Rotationsachse 305 ausgerichtet. Dementsprechend ist auch die dritte Rotationsachse 306 senkrecht zu der ersten Rotationsachse 304 ausgerichtet.

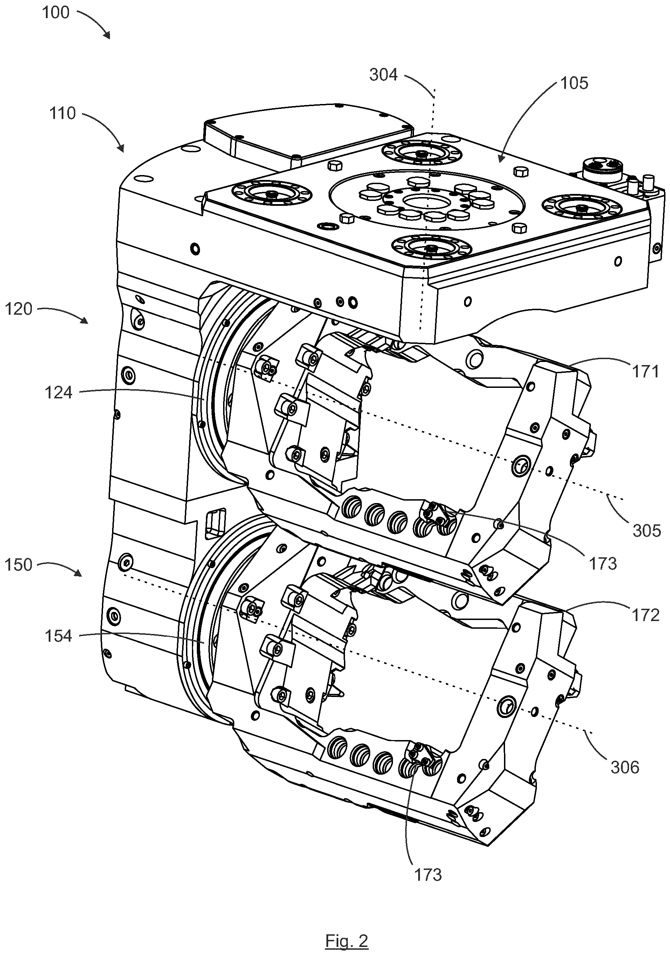

Fig. 2 zeigt die in Fig. 1 dargestellte Spannvorrichtung 100 mit einer ersten Spanneinheit 171 und einer zweiten Spanneinheit 172. Die erste Spanneinheit 171 ist an dem ersten Rundtisch 124 befestigt. Die zweite Spanneinheit 172 ist an dem zweiten Rundtisch 154 befestigt. Die erste Spanneinheit 171 und die zweite Spanneinheit 172 weisen jeweils ein Spannelement 173 auf. Die Spannelemente 173 sind jeweils zwischen einer Freigabestellung und einer ein zu bearbeitendes Werkstück festspannenden Spannstellung bewegbar. Mit der ersten Spanneinheit 171 ist ein erstes Werkstück festspannbar und mit der zweiten Spanneinheit 172 ein zweites Werkstück. Insbesondere weist die erste Spanneinheit 171 und/oder die zweite Spanneinheit 172 mehrere Spannelemente 173 auf.

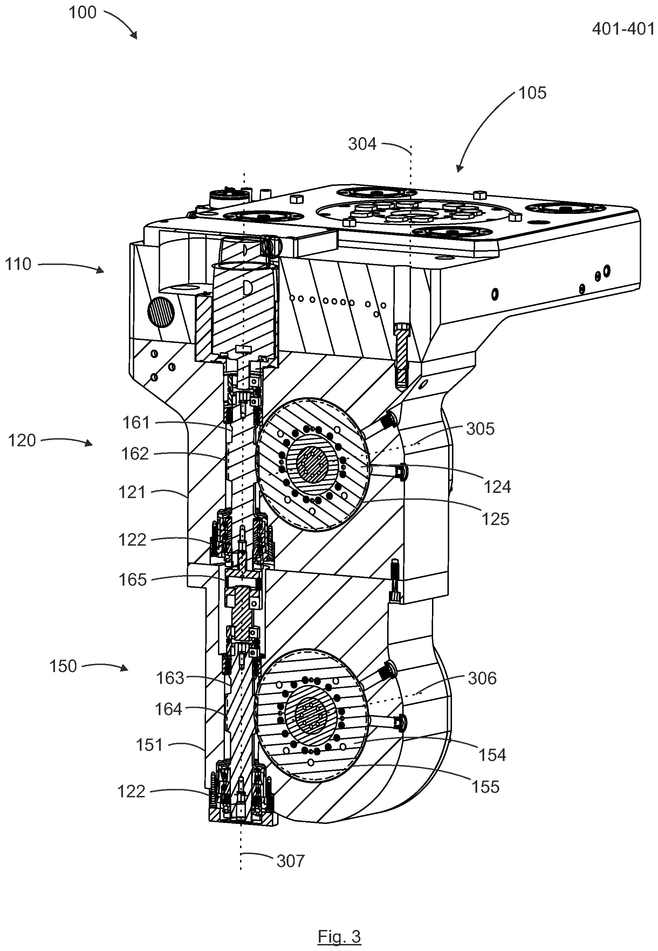

Fig. 3 zeigt die in Fig. 1 dargestellte Spannvorrichtung 100 in einer Schnittansicht 401-401. Die der in Fig. 3 dargestellten Schnittansicht 401-401 entsprechende Schnittebene 401 ist in Fig. 1 dargestellt. Die erste Spanneinheit-Aufnahmeeinrichtung 120 weist ein erstes Aufnahmegehäuse 121 auf. In dem ersten Aufnahmegehäuse 121 ist der erste Rundtisch 124 aufgenommen. Die zweite Spanneinheit-Aufnahmeeinrichtung 150 weist ein zweites Aufnahmegehäuse 151 auf. In dem zweiten Aufnahmegehäuse 151 ist der zweite Rundtisch 154 aufgenommen.

Rein exemplarisch sind eine zum rotatorischen Antrieb des ersten Rundtisches 124 ausgebildete erste Antriebswelle 161 und eine zum rotatorischen Antrieb des zweiten Rundtisches 154 ausgebildete zweite Antriebswelle 163 vorgesehen. Ferner exemplarisch ist die erste Antriebswelle 161 mittels einer Kupplung 165 mit der zweiten Antriebswelle 163 verbunden, insbesondere mittels einer wie in Fig. 3 dargestellten Balgkupplung. Insbesondere verlaufen eine Längsachse der ersten Antriebswelle 161 und eine Längsachse der zweite Antriebswelle 163 kollinear und zwar entlang einer gemeinsamen Antriebswellenlängsachse 307.

Rein exemplarisch weist die erste Antriebswelle 161 einen ersten Schneckengetriebeabschnitt 162 auf und weist die zweite Antriebswelle 163 einen zweiten Schneckengetriebeabschnitt 164 auf. Ferner exemplarisch weist der erste Rundtisch 124 an einer radialen Außenfläche einen ersten Schneckenradabschnitt 125 auf und weist der zweite Rundtisch 154 an einer radialen Außenfläche einen zweiten Schneckenradabschnitt 155 auf. Der erste Schneckenradabschnitt 125 steht mit dem ersten Schneckengetriebeabschnitt 162 in Eingriff und der zweite Schneckenradabschnitt 155 steht mit dem zweiten Schneckengetriebeabschnitt 164 in Eingriff.

Rein exemplarisch ist an dem ersten Aufnahmegehäuse 121 und an dem zweiten Aufnahmegehäuse 151 jeweils ein Distanzring 122 angeordnet. Mit dem an dem ersten Aufnahmegehäuse 121 angeordneten Distanzring 122 kann eine axiale Position der ersten Antriebswelle 161, also eine Position der ersten Antriebswelle 161 in Bezug auf die Antriebswellenlängsachse 307, eingestellt werden. Dies ist insbesondere dann vorteilhaft, wenn der erste Schneckengetriebeabschnitt 162 und der zweite Schneckengetriebeabschnitt 164 jeweils eine Duplex-Verzahnung aufweisen.

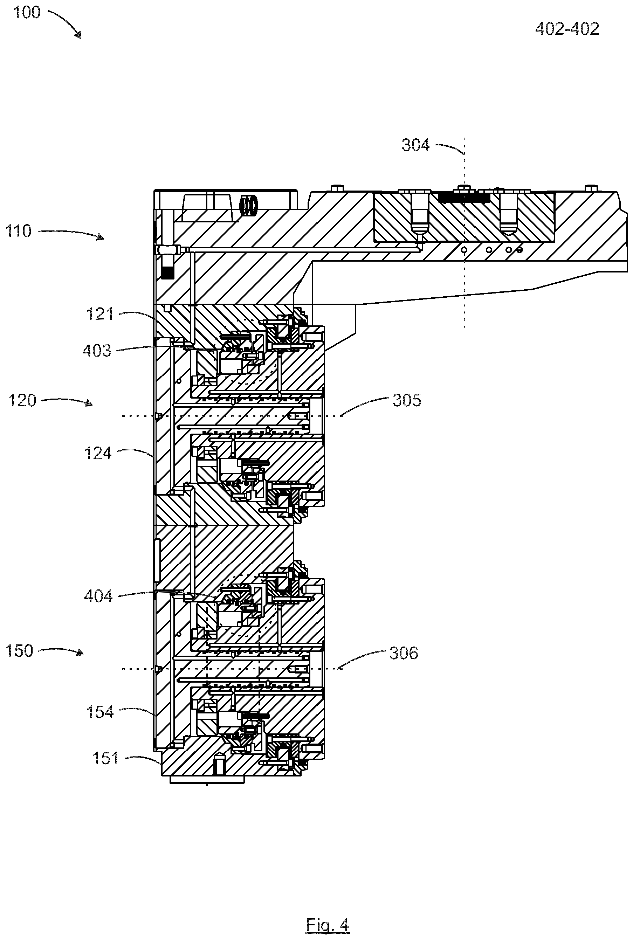

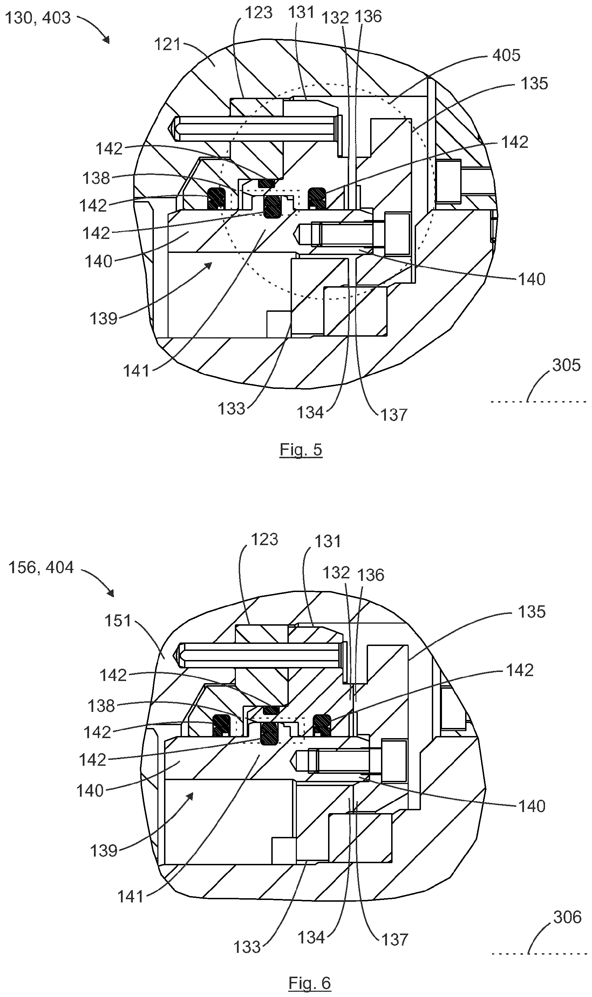

Fig. 4 zeigt die in den Fig. 1 und 3 dargestellte Spannvorrichtung 100 in einer weiteren Schnittansicht 402-402. Die der in Fig. 4 dargestellten Schnittansicht 402-402 entsprechende Schnittebene 402 ist in Fig. 1 dargestellt. Die Fig. 5 und 6 zeigen jeweils ein Detail 403, 404 der in den Fig. 1, 3 und 4 dargestellten Spannvorrichtung 100. Die Position der Details 403, 404 ist in Fig. 4 gekennzeichnet. Die erste Spanneinheit-Aufnahmeeinrichtung 120 weist eine erste Blockiereinrichtung 130 auf, von der ein Ausschnitt in Fig. 5 dargestellt ist. Die zweite Spanneinheit-Aufnahmeeinrichtung 150 weist eine zweite Blockiereinrichtung 156 auf, von der ein Ausschnitt in Fig. 6 dargestellt ist.

Rein exemplarisch sind die erste Blockiereinrichtung 130 und die zweite Blockiereinrichtung 156 gleichartig ausgebildet. Dementsprechend gilt das nachstehend in Zusammenhang mit der ersten Blockiereinrichtung 130 Beschriebene in gleicher Weise für die zweite Blockiereinrichtung 156. Die erste Blockiereinrichtung 130 weist ein als Außen-Kopplungselement 131 ausgebildetes erstes Kopplungselement auf und die zweite Blockiereinrichtung 156 ein ebenfalls als Außen-Kopplungselement 131 ausgebildetes zweites Kopplungselement. Die einzelnen Außen-Kopplungselemente 131 sind jeweils fest mit dem entsprechenden Aufnahmegehäuse 121, 151 verbunden.

Die Blockiereinrichtung 130, 156 weist ferner ein Innen-Kopplungselement 133 und ein Blockierelement 135 auf. Rein exemplarisch sind das Außen-Kopplungselement 131, das Innen-Kopplungselement 133 und das Blockierelement 135 einer einzelnen Blockiereinrichtung 130, 156 konzentrisch angeordnet, insbesondere konzentrisch in Bezug auf die dem entsprechenden Rundtisch 124, 154 zugeordnete Rotationsachse 305, 306. Das Blockierelement 135 ist mittels einer Einrückbewegung und einer entgegengesetzt zu der Einrückbewegung ausgerichteten Ausrückbewegung entlang einer Rückachse bewegbar, die rein exemplarisch parallel zu der betreffenden Rotationsachse 305, 306 ausgerichtet ist. Mittels der rein exemplarisch nach links gerichteten Einrückbewegung ist der betreffende Rundtisch 124, 154 in eine Blockierstellung versetzbar. Mittels der rein exemplarisch nach rechts gerichteten Ausrückbewegung ist der betreffende Rundtisch 124, 154 in eine Freistellung versetzbar.

In der Blockierstellung, die in Fig. 6 dargestellt ist, ist der betreffende Rundtisch 124, 154 in Bezug auf die entsprechende Rotationsachse 305, 306 drehfest mit dem betreffenden Aufnahmegehäuse 121, 151 gekoppelt. In der Freistellung, die in Fig. 5 dargestellt ist, ist der betreffende Rundtisch 124, 154 in Bezug auf die entsprechende Rotationsachse 305, 306 relativ zu dem betreffenden Aufnahmegehäuse 121, 151 rotierbar.

Das Blockierelement 135 weist ein als Axialverzahnung ausgebildetes erstes Brückenzahnprofil 136 auf. Das Außen-Kopplungselement 131 weist ein ebenfalls als Axialverzahnung ausgebildetes äußeres Zahnprofil 132 auf. Das Blockierelement 135 weist ferner ein als Axialverzahnung ausgebildetes zweites Brückenzahnprofil 137 auf. Das Innen-Kopplungselement 133 weist ein als Axialverzahnung ausgebildetes inneres Zahnprofil 134 auf. In der Blockierstellung (vgl. Fig. 6) liegt das erste Brückenzahnprofil 136 formschlüssig an dem äußeren Zahnprofil 132 an und liegt das zweite Brückenzahnprofil 137 formschlüssig an dem inneren Zahnprofil 134 an. Das heißt, dass in der Blockierstellung das durch das erste Brückenzahnprofil 136 und das äußere Zahnprofil 132 gebildete Zahnprofilpaar und das durch das zweite Brückenzahnprofil 137 und das innere Zahnprofil 134 gebildet Zahnprofilpaar gleichzeitig in Eingriff stehen. In der Freistellung (vgl. Fig. 5) ist das erste Brückenzahnprofil 136 von dem äußeren Zahnprofil 132 beabstandet und ist das zweite Brückenzahnprofil 137 von dem inneren Zahnprofil 134 beabstandet. Das heißt, dass die vorgenannten Zahnprofilpaare gleichzeitig außer Eingriff stehen.

Rein exemplarisch sind das Außen-Kopplungselement 131, das Innen-Kopplungselement 133 und das Blockierelement 135 jeweils ringartig ausgebildet und ferner exemplarisch in Bezug auf die betreffende Rotationsachse 305, 306 konzentrisch angeordnet.

Rein exemplarisch weisen die erste Blockiereinrichtung 130 und die zweite Blockiereinrichtung 156 jeweils eine hydraulisch wirkend ausgebildete Verstelleinrichtung auf, die ein mit dem Blockierelement 135 verbundenes Kolbenelement 139 aufweist. Mittels der Verstelleinrichtung sind die Einrückbewegung und die Ausrückbewegung ausführbar. Insbesondere ist das Kolbenelement 139 wie in den Fig. 5 und 6 dargestellt mit dem Blockierelement 135 verschraubt. Ferner exemplarisch ist ein Zylinder 138 vorgesehen, der durch einen zwischen dem Außen-Kopplungselement 131 und dem betreffenden Aufnahmegehäuse 121, 151 angeordneten Zwischenring 123, das Außen-Kopplungselement 131 und zwei voneinander beabstandete Endabschnitte 140 des Kolbenelementes 139 gebildet wird.

Rein exemplarisch weist das Kolbenelement 139 einen zwischen den beiden Endabschnitten 140 angeordneten Mittelabschnitt 141 auf, der in radialer Richtung in einen Innenraum des Zylinders 138 hineinragt. Der Mittelabschnitt 141 bildet in funktionaler Hinsicht den eigentlichen Kolben, also die sich in dem Zylinder 138 bewegende Komponente. Ferner exemplarisch sind im Bereich des Zylinders 138 Dichtungen 142 vorgesehen, die den Innenraum des Zylinders 138 nach außen hin abdichten. Beispielsweise ist an dem Zwischenring 123 eine Dichtung 142 festgelegt, sind an dem Außen-Kopplungselement 131 zwei Dichtungen 142 festgelegt und ist an dem Mittelabschnitt 141 eine Dichtung 142 festgelegt. Insbesondere sind die Dichtungen 142 jeweils als ringartige Runddichtungen ausgebildet.

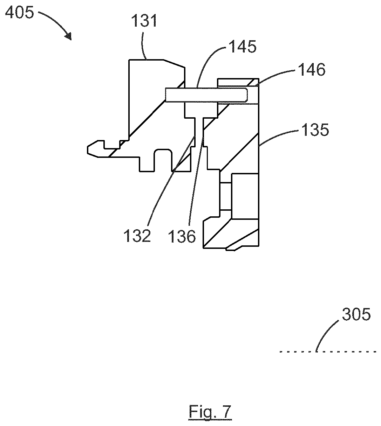

Fig. 7 zeigt ein weiteres Detail 405 einer Spannvorrichtung 100. Die Position des Details 405 ist in Fig. 5 gekennzeichnet. Rein exemplarisch weist die Blockiereinrichtung 130, 156 eine Spielbegrenzungseinrichtung mit einem an dem Außen-Kopplungselement 131 befestigten Begrenzungsstift 145 und einer an dem Blockierelement 135 vorgesehenen Stiftaufnahme 146 auf. Zwischen dem Begrenzungsstift 145 und der Stiftaufnahme 146 ist eine Spielpassung ausgebildet. Mit der Spielbegrenzungseinrichtung wird in der Freistellung in Bezug auf eine Rotation um betreffende Rotationsachse 305, 306 ein Spiel zwischen dem Außen-Kopplungselement 131 und dem Blockierelement 135 begrenzt. Der Begrenzungsstift 145 ist wie in Fig. 7 dargestellt auch dann in der Stiftaufnahme 146 aufgenommen, wenn sich der betreffende Rundtisch 124, 154 in der Freistellung befindet, was daran erkennbar ist, dass das äußere Zahnprofil 132 von dem ersten Brückenzahnprofil 136 beabstandet ist.

Fig. 8 zeigt ein Bearbeitungszentrum 200. Das Bearbeitungszentrum 200 weist eine entlang einer x-Achse 301 und entlang einer senkrecht zu der x-Achse 301 verlaufenden y-Achse 302 bewegbare Werkstückpositioniereinheit 220 auf. Die Werkstückpositioniereinheit 220 ist mit der Spannvorrichtung 100 bestückt. Das Bearbeitungszentrum 200 weist ferner Werkzeugschlittenvorrichtung 210 auf, die entlang einer senkrecht zu der x-Achse 301 und senkrecht zu der y-Achse 302 verlaufenden z-Achse 303 linear bewegbar ist. Rein exemplarisch ist die erste Rotationsachse 304 parallel zu der y-Achse 302 ausgerichtet.

## Patentansprüche

1. Spannvorrichtung (100) für ein Bearbeitungszentrum (200) zur mechanischen Bearbeitung von Werkstücken, aufweisend eine Werkstückpalette (110) zur Kopplung mit dem Bearbeitungszentrum (200), derart, dass die Spannvorrichtung (100) in einem gekoppelten Gebrauchszustand um eine erste Rotationsachse (304) rotierbar ist, und wobei die Spannvorrichtung (100) eine erste Spanneinheit-Aufnahmeeinrichtung (120) und eine zweite Spanneinheit-Aufnahmeeinrichtung (150) aufweist, die mit der Werkstückpalette (110) verbunden sind, wobei die erste Spanneinheit-Aufnahmeeinrichtung (120) ein erstes Aufnahmegehäuse (121) und einen in dem ersten Aufnahmegehäuse (121) aufgenommenen ersten Rundtisch (124) aufweist, an dem eine erste Spanneinheit (171) zur Aufnahme und zum Festspannen eines ersten Werkstückes befestigbar ist, wobei die zweite Spanneinheit-Aufnahmeeinrichtung (150) ein zweites Aufnahmegehäuse (151) und einen in dem zweiten Aufnahmegehäuse (151) aufgenommenen zweiten Rundtisch (154) aufweist, an dem eine zweite Spanneinheit (172) zur Aufnahme und zum Festspannen eines zweiten Werkstückes befestigbar ist, wobei die Spannvorrichtung (100) einen Rundtischantrieb aufweist, der dazu eingerichtet ist, den ersten Rundtisch (124) um eine zweite Rotationsachse (305) zu rotieren und den zweiten Rundtisch (154) um eine dritte Rotationsachse (306) zu rotieren, wobei die erste Spanneinheit-Aufnahmeeinrichtung (120) eine erste Blockiereinrichtung (130) mit einem an der ersten Spanneinheit-Aufnahmeeinrichtung (120) festgelegten ersten Kopplungselement und einem relativ zu dem ersten Kopplungselement bewegbaren ersten Blockierelement (135) aufweist, wobei der erste Rundtisch (124) mittels einer mit dem ersten Blockierelement (135) auszuführenden ersten Einrückbewegung in eine erste Blockierstellung, in der der erste Rundtisch (124) in Bezug auf die zweite Rotationsachse (305) drehfest mit dem ersten Aufnahmegehäuse (121) gekoppelt ist, und mittels einer mit dem ersten Blockierelement (135) auszuführenden ersten Ausrückbewegung in eine erste Freistellung, in der der erste Rundtisch (124) in Bezug auf die zweite Rotationsachse (305) relativ zu dem ersten Aufnahmegehäuse (121) rotierbar ist, versetzbar ist, wobei die zweite Spanneinheit-Aufnahmeeinrichtung (150) eine zweite Blockiereinrichtung (156) mit einem an der zweiten Spanneinheit-Aufnahmeeinrichtung (150) festgelegten zweiten Kopplungselement und einem relativ zu dem zweiten Kopplungselement bewegbaren zweiten Blockierelement (135) aufweist, wobei der zweite Rundtisch (154) mittels einer mit dem zweiten Blockierelement (135) auszuführenden zweiten Einrückbewegung in eine zweite Blockierstellung, in der der zweite Rundtisch (154) in Bezug auf die dritte Rotationsachse (306) drehfest mit dem zweiten Aufnahmegehäuse (151) gekoppelt ist, und mittels einer mit dem zweiten Blockierelement (135) auszuführenden zweiten Ausrückbewegung in eine zweite Freistellung, in der der zweite Rundtisch (154) in Bezug auf die dritte Rotationsachse (306) relativ zu dem zweiten Aufnahmegehäuse (151) rotierbar ist, versetzbar ist.

2. Spannvorrichtung (100) nach Anspruch 1, **dadurch gekennzeichnet, dass** bei wenigstens einer der Blockiereinrichtungen (130, 156) das Kopplungselement als fest mit dem Aufnahmegehäuse (121, 151) verbundenes Außen-Kopplungselement (131) ausgebildet ist, und dass wenigstens eine der Blockiereinrichtungen (130, 156) ein fest mit dem ersten Rundtisch (124) beziehungsweise dem zweiten Rundtisch (154) verbundenes Innen-Kopplungselement (133) aufweist, wobei in der Blockierstellung das Außen-Kopplungselement (131) in Bezug auf eine Rotation um die zweite Rotationsachse (305) beziehungsweise die dritte Rotationsachse (306) formschlüssig mit dem Innen-Kopplungselement (133) verbunden ist.

3. Spannvorrichtung (100) nach Anspruch 2, **dadurch gekennzeichnet, dass** das Außen-Kopplungselement (131) ein äußeres Zahnprofil (132) aufweist und dass das Innen-Kopplungselement (133) ein inneres Zahnprofil (134) aufweist, das in der Blockierstellung mit dem äußeren Zahnprofil (132) in Eingriff steht.

4. Spannvorrichtung (100) nach Anspruch 3, **dadurch gekennzeichnet, dass** das äußere Zahnprofil (132) und das innere Zahnprofil (134) jeweils als Axialverzahnung ausgebildet sind.

5. Spannvorrichtung (100) nach Anspruch 3 oder 4, **dadurch gekennzeichnet, dass** bei wenigstens einer der Blockiereinrichtungen (130, 156) das Blockierelement (135) ein, insbesondere als Axialverzahnung ausgebildetes, erstes Brückenzahnprofil (136) aufweist, das in der Blockierstellung formschlüssig an dem äußeren Zahnprofil (132) anliegt, und ein, insbesondere als Axialverzahnung ausgebildetes, zweites Brückenzahnprofil (137) aufweist, das in der Blockierstellung formschlüssig an dem inneren Zahnprofil (134) anliegt, wobei das Blockierelement (135) dazu eingerichtet ist, die Einrückbewegung und die Ausrückbewegung entlang einer, insbesondere parallel zu der zweiten Rotationsachse (305) beziehungsweise dritten Rotationsachse (306) ausgerichteten, Rückachse auszuführen, wobei vorzugsweise das Außen-Kopplungselement (131), das Innen-Kopplungselement (133) und das Blockierelement (135) jeweils ringartig ausgebildet sind.

6. Spannvorrichtung (100) nach Anspruch 5, **dadurch gekennzeichnet, dass** das äußere Zahnprofil (132) und das erste Brückenzahnprofil (136) sowie das innere Zahnprofil (134) und das zweite Brückenzahnprofil (137) jeweils eine Passverzahnung, bevorzugt eine Kerbverzahnung, besonders bevorzugt eine Plan-Kerbverzahnung, bilden.

7. Spannvorrichtung (100) nach Anspruch 5 oder 6, **dadurch gekennzeichnet, dass** wenigstens eine der Blockiereinrichtungen (130, 156) eine Verstelleinrichtung aufweist, die ein mit dem Blockierelement (135) verbundenes Kolbenelement (139) aufweist, das in einem Zylinder (138) aufgenommen ist, wobei die Verstelleinrichtung hydraulisch wirkend ausgebildet ist, wobei vorzugsweise der Zylinder (138) zumindest teilweise durch das Außen-Kopplungselement (131) gebildet ist.

8. Spannvorrichtung (100) nach einem der Ansprüche 5 bis 7, **dadurch gekennzeichnet, dass** wenigstens eine der Blockiereinrichtungen (130, 156) eine Spielbegrenzungseinrichtung aufweist, die in der Freistellung in Bezug auf eine Rotation um die zweite Rotationsachse (305) beziehungsweise dritte Rotationsachse (306) ein Spiel zwischen dem Außen-Kopplungselement (131) und dem Blockierelement (135) begrenzt.

9. Spannvorrichtung (100) nach Anspruch 8, **dadurch gekennzeichnet, dass** die Spielbegrenzungseinrichtung einen, insbesondere an dem Außen-Kopplungselement (131) befestigten, Begrenzungsstift (145) und eine, insbesondere an dem Blockierelement (135) vorgesehene, Stiftaufnahme (146) aufweist, wobei zwischen dem Begrenzungsstift (145) und der Stiftaufnahme (146) eine Spielpassung ausgebildet ist, wobei der Begrenzungsstift (145) in der Stiftaufnahme (146) aufgenommen ist, wenn sich der Rundtisch (124, 154) in der Freistellung befindet.

10. Spannvorrichtung (100) nach einem der vorhergehenden Ansprüche, **dadurch gekennzeichnet, dass** der Rundtischantrieb eine zum rotatorischen Antrieb des ersten Rundtisches (124) ausgebildete erste Antriebswelle (161) und eine zum rotatorischen Antrieb des zweiten Rundtisches (154) ausgebildete zweite Antriebswelle (163) aufweist, wobei vorzugsweise die erste Antriebswelle (161), insbesondere mittels einer Kupplung (165), mit der zweiten Antriebswelle (163) verbunden ist.

11. Spannvorrichtung (100) nach Anspruch 10, **dadurch gekennzeichnet, dass** wenigstens eine der Antriebswellen (161, 163) einen Schneckengetriebeabschnitt (162, 164) aufweist, wobei der Rundtisch (124, 154) an einer radialen Außenfläche einen mit dem Schneckengetriebeabschnitt (162, 164) in Eingriff stehenden Schneckenradabschnitt (125, 155) aufweist.

12. Spannvorrichtung (100) nach Anspruch 11, **dadurch gekennzeichnet, dass** wenigstens einer der Schneckengetriebeabschnitte (162, 164) eine Duplex-Verzahnung aufweist, wobei an wenigstens einem Aufnahmegehäuse (121, 151) zumindest ein Distanzring (122) angeordnet ist, um eine axiale Position der Antriebswelle (161, 163) in Bezug auf das Aufnahmegehäuse (121, 151) einzustellen.

13. Spannvorrichtung (100) nach einem der Ansprüche 10 bis 12, **dadurch gekennzeichnet, dass** der Rundtischantrieb dazu eingerichtet ist, den ersten Rundtisch (124) und den zweiten Rundtisch (154) synchron anzutreiben.

14. Spannvorrichtung (100) nach einem der vorhergehenden Ansprüche, **dadurch gekennzeichnet, dass** die Werkstückpalette (110) mit einer Gegen-Schnittstelle (105) zur Kopplung mit einer Schnittstelle eines Drehtellers des Bearbeitungszentrums (200) ausgebildet ist, wobei die Spannvorrichtung (100) über die Gegen-Schnittstelle (105) mittels dem Drehteller um die erste Rotationsachse (304) rotierbar ist, wobei vorzugsweise die erste Rotationsachse (304) schräg zu der zweiten Rotationsachse (305) und schräg zu der dritten Rotationsachse (306) verläuft.

15. Bearbeitungszentrum (200) zur Bearbeitung von Werkstücken mit einer entlang einer x-Achse (301) und entlang einer senkrecht zu der x-Achse (301) verlaufenden y-Achse (302) bewegbaren Werkstückpositioniereinheit (220), die mit einer Spannvorrichtung (100) nach einem der vorhergehenden Ansprüche bestückt ist, und mit einer Werkzeugschlittenvorrichtung (210), die mit einer Bearbeitungswerkzeugvorrichtung bestückbar ist, um ein mittels der ersten Spanneinheit (171) gespanntes erstes Werkstück und ein mittels der zweiten Spanneinheit (172) gespanntes zweites Werkstück in einer Bearbeitungszone mechanisch zu bearbeiten, wobei die Werkzeugschlittenvorrichtung (210) eine zu einer Rotationsbewegung antreibbare Antriebsspindel zur Bereitstellung von Antriebsenergie für die Bearbeitungswerkzeugvorrichtung aufweist, wobei die Werkzeugschlittenvorrichtung (210) entlang einer senkrecht zu der x-Achse (301) und senkrecht zu der y-Achse (302) verlaufenden z-Achse (303) linear bewegbar ist.
